# EUROPÄISCHE PATENTSCHRIFT

(11) **EP 1 045 749 B1**
(45) Veröffentlichungstag und Bekanntmachung des Hinweises auf die Patenterteilung: **16.04.2003**
(21) Anmeldenummer: 99900194.4
(22) Anmeldetag: 15.01.1999
(51) Int. Cl.: B29B 15/10, D06M 23/08, D06N 3/00, B05D 1/24, B05C 19/02

(54) **VERFAHREN ZUM BESCHICHTEN VON FASERN**
FIBER COATING METHOD
PROCEDE D'ENDUCTION DE FIBRES

(30) Priorität: 16.01.1998 CH 9198
(43) Veröffentlichungstag der Anmeldung: 25.10.2000
(73) Patentinhaber: Neopreg AG, 4460 Gelterkinden (CH)
(72) Erfinder: STÄHELI, Theo, CH-4153 Reinach (CH)
(74) Vertreter: Braun, André
(86) Internationale Anmeldenummer: CH9900019
(87) Internationale Veröffentlichungsnummer: WO99036239

(56) Entgegenhaltungen:
- EP-A- 0 599 404
- EP-A- 0 680 813
- DD-A- 46 793
- GB-A- 1 376 137
- DATABASE WPI Section Ch, Week 9420 Derwent Publications Ltd., London, GB; Class A32, AN 94-163474 XP002099323 & JP 06 106530 A (SEKISUI CHEM IND CO LTD) , 19. April 1994 (1994-04-19)

## Beschreibung

Die vorliegende Erfindung betrifft ein Verfahren zum Beschichten von Fasern, welche für die Herstellung von Tapes und Prepregs, von faserverstärkten Kunststoffgranulaten, sowie von faserverstärkten Formteilen Verwendung finden können. Zweck der Erfindung ist die vereinfachte und verbesserte Beschichtung von Fasern im Trockenbeschichtungsverfahren.

Die Herstellung von mit Kunststoff beschichteten Fasern, beispielsweise in Form von Fasersträngen (Rovings, Matten und/oder Geweben), Tapes, Prepregs oder faserverstärkten Kunststoffgranulaten ist an sich bekannt. Dabei werden üblicherweise Fasern mit einem Kunststoff, welcher diverse Zusatzstoffe enthalten kann, beschichtet und zu einem Granulat verarbeitet. Solche Granulate sind oft stäbchenförmig. Das Granulat wird dann in an sich bekannten Verfahren, wie beispielsweise Pressverfahren, zu faserverstärkten Formteilen verarbeitet.

Faserverstärkte Kunststoffgranulate können beispielsweise in einem an sich bekannten Compoundierverfahren mit Schnittgiasfasern hergestellt werden. Dabei werden die Fasern durch die hohe Scherbeanspruchung auf eine Restlänge von weniger als 1 mm gekürzt. Verglichen mit langfaserverstärkten Granulaten ergeben die mittels des Compoundierverfahrens hergestellten Granulate Formteile, deren Festigkeitswerte in der Regel vergleichsweise niedrig sind.

Ein weiteres bekanntes Verfahren ist die Schmelzenbeschichtung zur Herstellung von langfaserverstärkten Thermoplasten. Bei diesem Nassimprägnierverfahren werden die zu beschichtenden Faserstränge in Form von Rovings oder Fasergeflechten (Matten und/oder Gewebe) bereitgestellt. Diese werden durch eine thermoplastische oder duroplastische Kunststoffe enthaltende Schmelze geführt, abkühlen gelassen, und anschliessend gegebenenfalls granuliert. In der praktischen Anwendung dieses Verfahrens, insbesondere bei hohem Faseranteil und zunehmender Faserlänge werden aber eine hohe Streuung der Festigkeitswerte und zahlreiche örtliche Schwachstellen am Formteil festgestellt.

In einem weiteren bekannten Verfahren werden die zu beschichtenden Faserstränge durch ein flüssiges Imprägnierbad gezogen. Das Imprägnierbad enthält den in einem Lösungsmittel gelösten Kunststoff, beispielsweise ein Harz, den dazugehörigen Härter und einen Beschleuniger sowie Zusatzstoffe. Nachdem die Fasern durch dieses Imprägnierbad gezogen worden sind, wird das Lösungsmittel aus der Beschichtung durch Abdampfung entfernt. Anschliessen wird der Strang granuliert. Dieses Verfahren hat den Nachteil, dass ein Lösungsmittel verwendet wird. Im weiteren ist die Herstellungsgeschwindigkeit der beschichteten Fasergeflechte vergleichsweise niedrig, da das Lösungsmittel abgedampft und entfernt werden muss. Wird ein Reaktivharz, beispielsweise ein Epoxidharz, für die Beschichtung verwendet, so ist die beschichtete Faser bei Raumtemperatur nicht lagerstabil.

In EP-A-0 680 813 ist ein Verfahren zur Herstellung von langfaservertärkten Granulaten beschrieben. Dabei werden die zu beschichtenden Faserstränge im Trockenbeschichtungsverfahren durch eine Wirbelschicht bewegt, welche aus einem Kunststoffpulver besteht, in welchem bereits alle Zusatzstoffe eingearbeitet sind, wobei dieses Pulver als Beschichtung auf die Fasern aufzieht. Anschliessend werden die Fasern mit der nun vorhandenen Beschichtung erwärmt und der auf die Faser aufgebrachte Kunststoff verflüssigt. Nach dem Abkühlen der beschichteten Fasern werden diese granuliert. Wird ein reaktives Harzgemisch verwendet, so wird das erhaltene beschichtete Material im Erwärmungsvorgang vorvernetzt. Dieses Granulat wird dann zu faserverstärkten Formteilen, vorzugsweise im Pressverfahren, verarbeitet. Die gemäss diesem Verfahren erhaltenen mit Reaktivharzen, beispielsweise mit Epoxidharzen, beschichteten Fasern und Granulate haben den Nachteil, dass sie bei Raumtemperatur nicht lagerstabil sind und sich die Fliesseigenschaften solcher Produkte ständig verändern. Ein weiteres Problem bildet die geringe Latenz solcher Formmassen. Diese setzt der Produktivität im Compoundierverfahren enge Grenzen und schränkt die Möglichkeit der reaktiven Einstellung der Formmassen für die Beschichtung erheblich ein.

Es wurde nun überraschenderweise gefunden, dass es möglich ist, die einzelnen Komponenten der Beschichtung im Trockenbeschichtungsverfahren, beispielsweise im Wirbelschichtverfahren, ohne vorgängige Compoundierung direkt auf die Faser in der gewünschten Zusammensetzung gleichmässig aufzubringen, wenn man die einzelnen in der Wirbelschicht sich befindenden Beschichtungskomponenten zusätzlich in dem Masse in der Wirbelschicht mischt, dass die Entmischung der einzelnen Komponenten weitgehend verhindert bzw. aufgehoben wird. Überraschenderweise erhält man mit diesem Verfahren lagerstabile Produkte, welche bei Lagertemperaturen von 30°C sehr gute Lagerstabilitäten aufweisen. Auch gestattet dieses Verfahren eine sehr reaktive Einstellung der Formmassen und damit eine latente Härtung bei sehr kurzen Verarbeitungszyklen.

Gemäss der vorliegenden Erfindung wird durch das zusätzliche Mischen das gleichmässige Eindringen der Pulverpartikel zwischen und auf die Faserfilamente und die Fluidisierung von Pulvern mit ungünstiger Korngrössenverteilung gefördert, der Pulververlust nach der Beschichtung im Durchlaufofen vermindert und die Einhaltung und Steuerung eines exakten Fasergehalts verbessert. Im Herstellungsverfahren entfällt die compoundierung der einzelnen Beschichtungskomponenten sowie deren Vermahlung und Sichtung, was nicht nur technisch sondern auch wirtschaftlich erhebliche Vorteile mit sich bringt. Aus den derart beschichteten Fasern bzw. Fasersträngen lassen sich beispielsweise Tapes, Prepregs, Granulate und/oder Formteile herstellen.

Die vorliegende Erfindung ist in den Ansprüchen formuliert. Insbesondere betrifft die vorliegende Erfindung ein Verfahren zum Beschichten von Fasern, vorzugsweise in Form von Fasersträngen (Rovings Matten und/oder Gewebe), im Trockenbeschichtungsverfahren, vorzugsweise im Wirbelschichtverfahren, welches dadurch gekennzeichnet ist, dass man (i) die einzelnen Komponenten der Beschichtung ohne vorgängige Compoundierung direkt aus der Wirbelschicht auf die Faser in der gewünschten Zusammensetzung aufbringt und (ii) die einzelnen in der Wirbelschicht sich befindenden Beschichtungskomponenten während der Beschichtung zusätzlich in dem Masse mischt, dass die Entmischung der einzelnen Komponenten weitgehend verhindert wird.

Das Mischen bzw. die Durchmischung der Beschichtungskomponenten in der Wirbelschicht kann mechanisch, beispielsweise mit einem Rotor bzw. Rührer, mit Ultraschall, mit geeigneten elektromagnetischen Wellen oder mit andern an sich bekannten Methoden durchgeführt werden. Bevorzugt verwendet man eine mechanische Mischungsmethode oder Ultraschall, vorzugsweise eine mechanische Mischung. Besonders gute Resultate werden erhalten, wenn man die einzelnen Beschichtungskomponenten in der Wirbelschicht, neben der Durchmischung in der Wirbelschicht, zusätzlich elektrostatisch auflädt.

Die vorliegende Erfindung betrifft auch die erfindungsgemäss mit Kunststoff beschichteten Faserstränge (Rovings, Matten und/oder Gewebe).

Die vorliegende Erfindung betrifft auch die Verwendung der erfindungsgemäss mit Kunststoff beschichteten Faserstränge (Rovings, Matten und/oder Gewebe) für die Herstellung von Tapes, Prepregs, faserverstärkten Kunststoffgranulaten und/oder Formteilen, insbesondere von langfaserverstärkten Tapes, Prepregs, Kunststoffgranulaten und/oder Formteilen, insbesondere von langfaserverstärkten Kunststoffgranulaten oder faserverstärkten Formteilen. Tapes umfassen auch endlos hergestellte faserverstärkte Tapes sowie deren Herstellung. Prepregs umfassen unidirektionale und gewebeverstärkte Prepregs und deren Herstellung.

Die vorliegende Erfindung betrifft im weiteren ein Verfahren zur Herstellung von Tapes, Prepregs, Kunststoffgranulaten und/oder faserverstärkten Formteilen, insbesondere langfaserverstärkten Kunststoffgranulaten, welches dadurch gekennzeichnet ist, dass die zu deren Herstellung verwendeten beschichteten Faserstränge gemäss der vorliegenden Erfindung mit einem Kunststoff beschichtet wurden.

Als Fasern kann man erfindungsgemäss alle an sich bekannte Fasern verwenden, welche für die Herstellung von faserverstärkten Werkstoffen bekannt sind, wie beispielsweise synthetische anorganische Fasern, insbesondere Glasfasern, C-Fasern, Kunststofffasern, insbesondere Aramidfasern (aromatisches Polyamid) oder Naturfasern, insbesondere Cellulosefasern. Die Filamentstärke beträgt vorzugsweise etwa 5µm bis 20µm und etwa 100 tex - 4800 tex (0.1 g/m - 4.8 g/m), vorzugsweise 600 tex -1200 tex, wie solche üblicherweise verwendet werden.

Die Korngrössenverteilung der Beschichtungskomponenten liegt vorzugsweise im Bereich von 30µm - 250µm, vorzugsweise im Bereich von 50µm - 250µm. Die durchschnittliche Korngrösse liegt vorzugsweise bei etwa 50µm - 150µm.

Als Kunststoff kann man erfindungsgemäss die an sich bekannten thermoplastischen und duroplastischen Formmassen verwenden. Thermoplastische Formmassen bzw. Kunststoffe und deren Zusatzstoffe sind aus der Literatur in grosser Zahl bekannt. Duroplastische Kunststoffe in Form von Polykondensaten sind beispielsweise härtbare Phenol/Formaldehyd Kunststoffe (PF-Giessharze), härtbare Bisphenolharze, härtbare Harnstoff/Formaldehyd-Kunststoffe (UF-Formmassen), Polyimide (PI), BMI-Formmassen und Polybenzimidazole (PBI). Duroplastische Kunststoffe in Form von Polyaddukten sind beispielsweise Epoxidharze (EP), Formmassen aus ungesättigten Polyesterharzen (UP-Formmassen), DAP-Harze (Polydiallylphthalat), MF-Formmassen, z.B. härtbare Melamin/Phenol/Formaldehyd-Formmassen, oder vernetzte Polyurethane (PUR).

Als Zusätze für thermoplastische Formmassen bzw. Kunststoffe sowie für duroplastische Kunststoffe in Form von Polykondensaten oder Polyaddukten sind beispielsweise, neben dem Harz/Härter/Beschleuniger-System für Duroplaste, Trennmittel, Gleitmittel, Füllstoffe, Pigmente, Haftvermittler, Stabilisatoren und Inhibitoren. Solche Verbindungen sind an sich bekannt, ebenso wie die für die Beschichtungen gemäss der vorliegenden Erfindung zu verwendenden bevorzugten Zusammensetzungen.

Für die mechanische Durchmischung der Beschichtungskomponenten in der Wirbelschicht werden vorzugsweise die aufgefächerten Faserstränge (Rovings, Matten und/oder Gewebe) parallel zwischen dem Fluidboden und einem oder mehreren horizontal rotierenden Rotoren, welche mit einer Geschwindigkeit rotieren, welche die mechanische Durchmischung der Beschichtungskomponenten gewährleistet, geführt. Der Rotor vermeidet eine allfällige Kraterbildung, so dass erfindungsgemäss auch unter konventionellen Bedingungen nichtfluidisierbare Pulver verwendet werden können. Durch die erzeugte Reibung zwischen Polymerpulver und dem Rotorflügel oder den Rotorflügeln werden die Pulverpartikel zusätzlich elektrostatisch aufgeladen, so dass diese Partikel während dem Ofendurchlauf besser an den Filamenten haften. Diese elektrostatische Aufladung kann 1000 bis 2000 Volt betragen.

Die Temperatur der Zuluft zum Fluidisierbecken, das heisst die Konditionierung der Fluidisierluft, wird proportional zum Schmelzpunkt des Polymerpulvers gesteuert. Damit kann die Pulverauftragsmenge gesteuert werden. Es wird vorzugsweise ein Fluidboden aus gesintertem Aluminium verwendet. Die Konditionierung der Fluidisierluft ermöglicht es, Thermoplastpulver mit hohem Schmelzpunkt bereits während der Beschichtung bis unter die Erweichungstemperatur vorzuheizen und damit die erforderliche Aufheizzeit zu reduzieren. So kann die Produktivität bei Thermoplasten mit hohem Schmelzpunkt erheblich erhöht werden. Die Erwärmung bei der Konditionierung darf bei Reaktivharzgemischen allerdings nur bis genügend unterhalb der Temperatur (On-Set-Temperatur) erfolgen, bei welcher der exotherme Aushärtungsvorgang dieser Harzgemische einsetzt.

Im Beschichtungsverfahren selbst werden die Faserstränge (Rovings, Matten und/oder Gewebe) von einem Rovinggestell abgewickelt, vorzugsweise auch aufgefächert und durch das Wirbelschichtbad durchgeführt. Das Wirbelschichtbad umfasst prinzipiell eine Wanne und enthält die Zuführung für die Beschichtungskomponenten sowie den Fluidboden, der vorzugsweise aus gesintertem Aluminium besteht und durch welchen die Zuluft zum Fluidisierbecken, das ist die Fluidisierluft zur Aufrechterhaltung der Wirbelschicht, eingeleitet wird. Dabei ist der Durchmesser der Perforationen im perforierten Zwischenboden (Fluidboden) kleiner als die Korngrösse des verwendeten Beschichtungspulvers bzw. der Beschichtungskomponenten oder des Granulats. Durch die Perforationen wird von unten her Luft oder ein Inertgas eingeblasen, so dass ein wallendes Pulver- oder Granulatbad bzw. eine Wirbelschicht entsteht. Im Wirbelschichtbad befinden sich auch mehrere Umlenkrollen oder Umlenkstäbe zur Auffächerung und Straffung der Fasern sowie erfindungsgemäss eine Mischvorrichtung für die Durchmischung der Beschichtungskomponenten. Vorzugsweise verwendet man drehbare Umlenkrollen im Bereich, wo die Fasern bereits beschichtet sind und nicht drehbare Umlenkstäbe im Einzugsbereich, wo die Fasern noch nicht beschichtet sind. Die Mischvorrichtung kann aus einem Rotor oder einem Rührer oder aus mehreren Rotoren oder mehreren Rührern bestehen, welche die Beschichtungskomponenten durchmischen. Der Rotor kann beispielsweise eine durchlöcherte drehbare Scheibe sein, welche mehrere Durchbohrungen (Löcher) mit Durchmessern zwischen 1 bis 10 cm enthält und horizontal um ihren Mittelpunkt dreht oder einen Stahlrührer bzw. eine einfache Stange darstellen, welche an ihrem Mittelpunkt senkrecht gestützt wird und mit hoher Geschwindigkeit rotiert. Vorzugsweise sind die Rotoren bzw. Rührer nahe an die Faserstränge angebracht, so dass die auf die Beschichtungskomponenten ausgeübten mechanischen Kräfte zusätzlich das verbesserte Eindringen der Pulverteilchen in das Innere der aufgefächerten Faserstränge bewirken. Der Rotor ist vorzugsweise unmittelbar, das heisst etwa 3 mm bis 10 mm über dem Fluidboden angebracht, so dass das zu fluidisierende Pulver bereits vor der Fluidisierung gerührt wird und so allfällig sich bildende Brücken in dem zu fluidisierenden Pulver sofort zerstört werden. Die Umdrehungszahl eines solchen Rührers liegt je nach der Konstruktion bei etwa 100 Umdrehungen pro Minute (UpM) bis etwa 400 UpM, vorzugsweise bei etwa 200 UpM bis etwa 300 UpM. Die Umdrehungszahl hängt aber von den vorhandenen Konstruktionsmerkmalen und Verfahrensbedingungen ab und muss jeweils im Verfahren optimiert werden, was für den Fachmann problemlos ist.

Nachdem die beschichteten Faserstränge das Wirbelschichtbad verlassen haben werden sie erwärmt. Vorzugsweise werden die beschichteten Faserstränge hierzu wieder gebündelt und durch einen Infra-Rot-Erhitzer geführt, wo die Beschichtung durch kurzes Erhitzen fixiert wird. Dabei wird die Beschichtung leicht flüssig oder pastös, aber nicht so flüssig, dass sie von den Fasern abtropfen kann. In diesem Zustand kann mittels einer Nachbeschichtung sofort anschliessend vorzugsweise in einer weiteren analog konstruierten Beschichtungseinrichtung, wie die oben beschrieben, das heisst vorzugsweise ebenfalls im Wirbelschichtverfahren, weiteres Beschichtungspulver oder Granulat aufgebracht und anschliessend im Infra-Rotofen getrocknet werden. In dieser Weise kann die gewünschte Menge Kunststoff, die auf die Fasern aufgebracht werden soll, noch ergänzt werden. Derart können die mit der ersten Beschichtung erhaltenen Fadengewichte verdoppelt und Fadengewichte mit sehr niedrigem Glasanteil erhalten werden. So sind derart beispielsweise Fäden mit nur 15 Gew.-% Glasfaseranteil erhältlich. Ebenso kann der Mineralanteil in der Beschichtung durch eine Nachbeschichtung merklich erhöht werden. Das Wirbelsinterbad und die Beschichtungseinrichtung können dabei druckmässig miteinander verbunden sein, wobei in beiden Vorrichtungen vorzugsweise unter leichtem Unterdruck gearbeitet wird.

Nachdem die Faserstränge die Beschichtungseinrichtung durchlaufen haben, werden die nun beschichteten Faserstränge durch eine Konditionierstrecke geführt, welche aus einer Kühleinrichtung und gegebenenfalls einer Erwärmungseinrichtung besteht. Wurde als Beschichtung ein Epoxidharzgemisch aufgebracht, so werden die Faserstränge erneut erwärmt, wobei das Epoxidharzgemisch vorgeliert bzw. vorvernetzt, jedoch nicht ausgehärtet wird. Die beschichteten und aufgefächerten Fasern können hier gegebenenfalls wieder zusammengeführt und in einer anschliessenden Kühleinrichtung abgekühlt werden. Die Kühlung ist vor allem auch deshalb notwendig, weil der Faser/Kunststoff-Verbund anschliessend durch ein Walzenpaar gezogen wird, welches diesen Verbund transportiert. Am Ort des Walzenpaares muss der Faser/Kunststoff-Verbund einen festen Zustand aufweisen, da sonst der Kunststoff an den Walzen des Walzenpaares haften kann, wodurch diese verschmutzt würden und unter Umständen ein zuverlässiger Transport des Faser/Kunststoff-Verbunds behindert würde. Vorzugsweise durchläuft der Faser/Kunststoffverbund noch eine Erwärmungseinrichtung, in welcher eventuell vorhandene Spannungen in dem Verbund abgebaut werden. Anschliessend kann der erhaltene beschichtete Faserstrang aufgewickelt oder granuliert werden.

In diesem Sinne betrifft die vorliegende Erfindung ein Verfahren zur Beschichtung von Fasern, welches dadurch gekennzeichnet ist, dass man (i) die Beschichtung in einem Wirbelschichtbad durchführt, welches eine Wanne, eine Zuführung für die Beschichtungskomponenten, einen Fluidboden, mehrere Umlenkstangen zur Auffächerung und Straffung der Fasern sowie eine Mischvorrichtung für die Durchmischung der Beschichtungskomponenten umfasst, anschliessend (ii) in einem Infra-Rot-Erhitzer, die Beschichtung durch kurzes Erhitzen fixiert, gegebenenfalls (iii) sofort anschliessend vorzugsweise in einer weiteren Beschichtungseinrichtung ebenfalls im Wirbelschichtverfahren, weiteres Beschichtungspulver oder Granulat aufbringt und dann (iv) die nun beschichteten Faserstränge durch eine Konditionierstrecke führt, welche aus einer Kühleinrichtung und gegebenenfalls einer Erwärmungseinrichtung besteht und abschliessend die abgekühlte beschichteten Fasern gegebenenfalls aufwickelt oder granuliert.

Für die erfindungsgemässe Beschichtung von Fasersträngen (Rovings, Matten und/oder Gewebe) mit einem Reaktionsharz (z.B. Epoxidharz) verwendet man eine Schmelzentemperatur im Bereich von 60°C - 400°C, vorzugsweise 70°C - 220°C, eine Walzentemperatur von 10°C - 200°C, vorzugsweise 20°C - 50°C, eine Fadengeschwindigkeit von 3 - 200 m/Minute, vorzugsweise 80 - 150 m/Minute. Die Verarbeitungsbedingungen für die diversen faserverstärkten Kunststoffe und Kunststoffgranulate sind an sich bekannt und können vom Fachmann ohne weiteres für das jeweilig verwendete Harz richtig angewendet werden.

Die vorliegende Erfindung betrifft auch eine Vorrichtung zur Durchführung des erfindungsgemässen Verfahrens, wobei diese Vorrichtung die folgenden Bestandteilen umfasst: (i) ein Wirbelschichtbad, welches eine Wanne, eine Zuführung für die Beschichtungskomponenten, einen Fluidboden, mehrere Umlenkstangen zur Auffächerung und Straffung der Fasern, (ii) daran angeschlossen einen Infra-Rot-Erhitzer, für die Fixierung der Beschichtung, (iii) daran angeschlossen gegebenenfalls eine weitere Beschichtungseinrichtung, und (iv) einen Infra-Rot-Erhitzer oder eine Konditionierstrecke, welche eine Kühleinrichtung und gegebenenfalls eine Erwärmungseinrichtung umfasst, zur weiteren Behandlung und Kühlung der beschichteten Faserstränge, dadurch gekennzeichnet, dass das Wirbelsinterbad eine Mischvorrichtung für die Durchmischung der Beschichtungskomponenten enthält.
Die folgenden Beispiele illustrieren die Erfindung.

### Beispiel 1

Glasrovings enthaltend 900 Filamente mit einem Filamentdurchmesser von jeweils 0.005 mm, 0.01 mm und 0.018 mm (5µm, 10µm und 18µm) werden mit einer Matrix beschichtet, welche ein übliches Bisphenolharz und Härter (85% der gesamten Beschichtung) sowie übliche Trennmittel, Gleitmittel, Füllstoffe (14.5%), und Pigmente in üblicher Zusammensetzung enthält. Die Komponenten der Matrix werden in einem Mischer gemischt und haben eine Korngrössenverteilung im Bereich von 30µm bis 200µm. Das Beschichtungsverfahren wird in einer Apparatur durchgeführt, wie eine solche in der EP-A-0 680 813 beschrieben ist, jedoch mit der Modifikation, dass unmittelbar, d.i. 5 mm über dem Fluidboden ein metallischer Rotorstab angebracht ist, welcher mit 200 UpM rotiert und das Beschichtungsgemisch ganzflächig durchmischt. Durch die intensive Durchmischung wird das Gemisch auch elektrostatisch aufgeladen. Die Glasrovings werden von einem Rovinggestell von innen beginnend oder von aussen abgewickelt, aufgefächert und mit einer Geschwindigkeit von 100 m/Minute über vier Umlenkstangen durch das Wirbelsinterbad geführt. Die Beschichtung auf den Rovings wird anschliessend in einem Infra-Rot-Durchlaufofen bei einer Temperatur von 180°C zum Schmelzen gebracht. Die mit dem geschmolzenen Kunststoff getränkten Glasrovings werden anschliessend nochmals einer weiteren Beschichtung im Wirbelschichtverfahren unterzogen. Die beschichteten Rovings werden dann gekühlt, so dass der Kunststoff wieder fest wird und anschliessend granuliert. Das derart erhaltene Granulat wird nun jeweils in einem Pressvorgang zu einem Normstab gemäss ISO-Norm 178 verarbeitet und auf die mechanischen Werte geprüft, wobei ausgezeichnete Werte für die Biegefestigkeiten und E-Module erhalten werden.

### Beispiel 2

Glasrovings gemäss Beispiel 1 werden in analoger Weise mit einer Matrix beschichtet, wie dies in Beispiel 1 beschrieben ist. Nach dem ersten Durchlauf durch den Infra-Rot-Durchlaufofen erfolgt eine Nachbeschichtung mit einer Zusammensetzung bestehend aus einem üblichen Epoxidharz (47.4 % Harz und 12.2% Härter), einem üblichen Beschleuniger (0.2%), Füllmaterial (Aluminiumhydroxid, 38%) und 2.2% weiteren an sich üblichen Zutaten (Trennmittel, Gleitmittel und Pigmente). Die beschichteten Rovings werden nochmals durch einen Infra-Rot-Durchlaufofen geleitet und dann gekühlt, so dass der Kunststoff wieder fest wird und anschliessend granuliert. Das derart erhaltene Granulat hat einen Epoxidanteil von 30.8%, einen Füllmaterialanteil von 25.5% und einen Glasfaseranteil von 42.4%. Das Granulat wird anschliessend analog zu Beispiel 1 zu Normstäben gemäss ISO-Norm 178 verarbeitet und auf die mechanischen Werte geprüft, wobei ausgezeichnete Werte erhalten werden.

## Patentansprüche

1. Verfahren zum Beschichten von Fasern in Form von Fasersträngen (Rovings, Matten und/oder Gewebe) im Wirbelschichtverfahren, **dadurch gekennzeichnet, dass** man (i) die einzelnen Komponenten der Beschichtung ohne vorgängige Compoundierung direkt aus der Wirbelschicht auf die Faser in der gewünschten Zusammensetzung aufbringt und (ii) die einzelnen in der Wirbelschicht sich befindenden Beschichtungskomponenten während der Beschichtung zusätzlich in dem Masse mischt, dass die Entmischung der einzelnen Komponenten weitgehend verhindert wird.

2. Verfahren nach Anspruch 1, **dadurch gekennzeichnet, dass** die Durchmischung der Beschichtungskomponenten in der Wirbelschicht mechanisch, mit Ultraschall oder mit geeigneten elektromagnetischen Wellen, vorzugsweise mechanisch oder mit Ultraschall, durchgeführt wird.

3. Verfahren nach Anspruch 1 oder 2, **dadurch gekennzeichnet, dass** man als Fasern synthetische anorganische Fasern, vorzugsweise Glasfasern, C-Fasern, Kunststoffasern, vorzugsweise Aramidfasern oder Naturfasern, vorzugsweise Cellulosefasern verwendet.

4. Verfahren nach einem der Ansprüche 1 bis 3, **dadurch gekennzeichnet, dass** die Filamentstärke der zu beschichtenden Fasern 5µm bis 20µm und 100 tex - 4800 tex, vorzugsweise 600 tex -1200 tex, beträgt.

5. Verfahren nach einem der Ansprüche 1 bis 4, **dadurch gekennzeichnet, dass** die Korngrössenverteilung der Beschichtungskomponenten im Bereich von 30µm - 250µm, vorzugsweise im Bereich von 50µm - 250µm liegt.

6. Verfahren nach einem der Ansprüche 1 bis 5, **dadurch gekennzeichnet, dass** man als Kunststoff an sich bekannte thermoplastische und duroplastische Formmassen verwendet, vorzugsweise duroplastische Kunststoffe in Form von Polykondensaten oder Polyaddukten.

7. Verfahren nach Anspruch 6, **dadurch gekennzeichnet, dass** die thermoplastischen Formmassen bzw. Kunststoffe sowie die duroplastischen Kunststoffe neben dem Harz/Härter/Beschleuniger-System für Duroplaste, Trennmittel, Gleitmittel, Füllstoffe, Pigmente, Haftvermittler, Stabilisatoren und/oder Inhibitoren enthalten.

8. Verfahren nach einem der Ansprüche 1 bis 7, **dadurch gekennzeichnet, dass** die Pulverpartikel in der Wirbelschicht elektrostatisch auflädt.

9. Verfahren nach einem der Ansprüche 1 bis 8, **dadurch gekennzeichnet, dass** die im ersten Durchgang beschichteten Faserstränge mittels einer Nachbeschichtung im Wirbelschichtverfahren mindestens ein weiteres Mal beschichtet und anschliessend im Infra-Rot-Durchlaufofen getrocknet wurden.

10. Verfahren nach einem der Ansprüche 1 bis 9, **dadurch gekennzeichnet, dass** man (i) die Beschichtung in einem Wirbelschichtbad durchführt, welches eine Wanne, eine Zuführung für die Beschichtungskomponenten, einen Fluidboden, mehrere Umlenkstangen zur Auffächerung und Straffung der Fasern sowie eine Mischvorrichtung für die Durchmischung der Beschichtungskomponenten umfasst, anschliessend (ii) in einem Infra-Rot-Erhitzer, die Beschichtung durch kurzes Erhitzen fixiert, gegebenenfalls (iii) sofort anschliessend vorzugsweise in einer weiteren Beschichtungseinrichtung ebenfalls im Wirbelschichtverfahren, weiteres Beschichtungspulver oder Granulat aufbringt und dann (iv) die nun beschichteten Faserstränge durch einen Infra-Rot-Durchlaufofen oder eine Konditionierstrecke führt, welche aus einer Kühleinrichtung und gegebenenfalls einer Erwärmungseinrichtung besteht und abschliessend die abgekühlte beschichteten Fasern gegebenenfalls aufwickelt oder granuliert.

11. Verwendung der gemäss den Ansprüchen 1 - 10 beschichteten Faserstränge zur Herstellung von Kunststoffgranulaten und/oder faserverstärkten Formteilen.

12. Vorrichtung zur Durchführung des Verfahrens gemäss einem der Ansprüche 1 bis 10, umfassend (i) ein Wirbelsinterbad, welches eine Wanne, eine Zuführung für die Beschichtungskomponenten, einen Fluidboden, mehrere Umlenkstangen zur Auffächerung und Straffung der Fasern (ii) daran angeschlossen einen Infra-Rot-Erhitzer, für die Fixierung der Beschichtung, (iii) daran angeschlossen gegebenenfalls eine weitere Beschichtungseinrichtung, und (iv) einen Infra-Rot-Erhitzer oder eine Konditionierstrecke, welche eine Kühleinrichtung und gegebenenfalls eine Erwärmungseinrichtung umfasst, zur weiteren Behandlung und Kühlung der beschichteten Faserstränge, **dadurch gekennzeichnet, dass** das Wirbelsinterbad eine Mischvorrichtung für die Durchmischung der Beschichtungskomponenten enthält.

## Claims

1. Method of coating fibres in the form of fibre strands (rovings, mats and/or woven fabrics) using a fluidised bed technique, **characterised in that** (i) the individual coating components are applied to the fibres directly from the fluidised bed in the desired composition without previous compounding and (ii) the individual coating components contained in the fluidised bed are additionally mixed during the coating process under such conditions that dissociation of the individual components is substantially avoided.

2. Method according to claim 1, **characterised in that** the additional mixing of the coating components in the fluidised bed is carried out mechanically, with ultrasound or with suitable electromagnetic waves, preferably mechanically or with ultrasound.

3. Method according to claim 1 or 2, **characterised in that** the fibres used are synthetic inorganic fibres, preferably glass fibres, C-fibres, plastic fibres, preferably aramide fibres, or natural fibres, preferably cellulose fibres.

4. Method according to one of claims 1 to 3, **characterised in that** the filament thickness of the fibres to be coated is 5 µm to 20 µm and 100 tex - 4800 tex, preferably 600 tex - 1200 tex.

5. Method according to one of claims 1 to 4, **characterised in that** the particle size distribution of the coating components is within the range of 30 µm - 250 µm, preferably within the range of 50 µm - 250 µm.

6. Method according to one of claims 1 to 5, **characterised in that** the plastics used are thermoplastic and thermosetting moulding components known per se, preferably thermosetting synthetic polymers in the form of polycondensates or polyadducts.

7. Method according to claim 6, **characterised in that** the thermoplastic moulding components resp. synthetic polymers as well as the thermosetting polymers contain, in addition to the resin/curing agent/accelerator system for thermosets, release agents, lubricants, fillers, pigments, primers, stabilisers and/or inhibitors.

8. Method according to one of claims 1 to 7, **characterised in that** the powder particles are charged electrostatically within the fluidized bed.

9. Method according to one of claims 1 to 8, **characterised in that** the fibre strands coated in the first pass are coated with at least one additional coat by means of an after-coating operation using a fluidized bed technique, and subsequently dried in a continuous infrared oven.

10. Method according to one of claims 1 to 9, **characterised in that** (i) the coating operation is carried out in a sintering bath (for producing a fluidised bed) comprising a trough, an inlet for the coating components, a fluid bottom, several deflection bars for fanning out and tautening the fibres, and a mixing device for thorough mixing of the coating components, then (ii) the coating is fixed by brief heating in an infrared heater, optionally (iii) immediately applying further coating powder or granules, which is preferably done in another coating device also using a fluidized bed technique, and then (iv) the coated fibre strands are led through a continuous infrared oven or a conditioning section consisting of a cooling device and optionally a heating device, and finally the cooled coated fibres are optionally wound up or granulated.

11. The use of the fibre strands coated according to the claims 1 to 10 for the production of plastic granules and/or fibre-reinforced shaped articles.

12. Device for carrying out the method according to one of the claims 1 to 10, **characterised in that** this device comprises (i) a sintering bath (for the production of a fluidised bed) comprising a trough, an inlet for the coating components, a fluid bottom, several deflection bars for fanning cut and tautening the fibres, (ii) connected thereto an infrared heater for fixing the coating, (iii) connected thereto optionally another coating device and (iv) an infrared heater or a conditioning section consisting of a cooling device and optionally a heating device, for a further treatment and cooling of the coated fibre strands, **characterised in that** said sintering bath contains a mixing device for the thorough mixing of the coating components.

## Revendications

1. Procédé d'enduction de fibres sous forme de torons en fibres (rovings, nattes et/ ou tissus) dans un procédé à lit fluidisé, **caractérisé en ce que** (i) les composants individuels d'enduction sont appliqués directement depuis le lit fluidisé sur la fibre dans la composition souhaitée sans les compounder préalablement et (ii) les composants individuels d'enduction se trouvant dans le lit fluidisé sont additionnellement mélangés pendant l'enduction sous de telles conditions évitant considérablement la dissociation des composants individuels.

2. Procédé selon la revendication 1, **caractérisé en ce que** le mélange intime des composants d'enduction dans le lit fluidisé est réalisé de manière mécanique, avec ultrason ou avec des ondes électromagnétiques appropriées, de préférence de manière mécanique ou avec ultrason.

3. Procédé selon la revendication 1 ou 2, **caractérisé en ce que** les fibres utilisées sont des fibres inorganiques synthétiques, de préférence des fibres de verre, des C-fibres, des fibres en matière plastique, de préférence des fibres aramides ou des fibres naturelles, de préférence des fibres de cellulose.

4. Procédé selon l'une quelconque des revendications 1 à 3, **caractérisé en ce que** la force de filament des fibres à enduire est comprise entre 5µm et 20 µm et entre 100 tex et 4800 tex, de préférence entre 600 tex et 1200 tex.

5. Procédé selon l'une quelconque des revendications 1 à 4, **caractérisé en ce que** la distribution granulométrique des composants d'enduction est comprise dans une zone de 30µm à 250 µm, de préférence dans une zone de 50µm à 250µm.

6. Procédé selon l'une quelconque des revendications 1 à 5, **caractérisé en ce que** les matières plastiques utilisées sont des composants à mouler thermoplastiques et thermodurcissables connus en soi, de préférence des matières plastiques thermodurcissables sous forme de polycondensats ou polyadductes.

7. Procédé selon la revendication 6, **caractérisé en ce que** les composants à mouler resp. matières plastiques thermoplastiques ainsi que les matières plastiques thermodurcissables contiennent en plus du système résine/durcisseur/accélérateur pour les matières thermodurcissables, des agents de séparation, des lubrifiants, des agents de remplissage, des pigments, des agents d'accrochage, des stabilisateurs et/ ou des inhibiteurs.

8. Procédé selon l'une quelconque des revendications 1 à 7, **caractérisé en ce que** les particules de poudres sont chargées de manière électrostatique dans le lit fluidisé.

9. Procédé selon l'une quelconque des revendications 1 à 8, **caractérisé en ce que** les torons de fibres enduits dans la première phase sont enduits au moins une autre fois au moyen d'une postenduction utilisant un procédé à lit fluidisé et ensuite séchés dans un four continue à infrarouge.

10. Procédé selon l'une quelconque des revendications 1 à 9, **caractérisé en ce que** (i) l'enduction est réalisée dans un bain à lit fluidisé qui comprend une cuve, une arrivée pour les composants d'enduction, un fond fluide, plusieurs barres de renvoi pour détordre et tendre les fibres ainsi qu'un appareil de mélange pour le mélange intime des composants d'enduction, ensuite (ii) l'enduction est fixée par un chauffage rapide dans un chauffage infrarouge, optionnellement (iii) de suite est appliqué une autre poudre ou un autre granulé d'enduction de préférence dans une autre installation d'enduction également avec le procédé à lit fluidisé, et ensuite (iv) les torons de fibres à présent enduits sont conduits à travers un four continu à infrarouge ou une section de conditionnement qui est composé d'un appareil de refroidissement et optionnellement d'un appareil d'échauffement et pour terminer les fibres enduites refroidies sont optionnellement enroulées ou granulées.

11. Utilisation des torons de fibres enduits selon l'une quelconque des revendications 1 à 10 pour la fabrication de granulés en matière plastique et/ ou de pièces moulées renforcées en fibres.

12. Appareil pour la réalisation du procédé selon l'une quelconque des revendications 1 à 10, comprenant (i) un bain d'enduction en lit fluidisé qui comprend une cuve, une arrivée pour les composants d'enduction, un fond fluide, plusieurs barres de renvoi pour détordre et tendre les fibres, (ii) raccordé à un chauffage infrarouge pour la fixation de l'enduction, (iii) raccordé optionnellement une autre installation d'enduction, et (iv) un dispositif de chauffage à infrarouge ou une section de conditionnement qui comprend un appareil de refroidissement et optionnellement un appareil d'échauffement pour un traitement ultérieur et le refroidissement des torons de fibres enduits, **caractérisé en ce que** ledit bain d'enduction en lit fluidisé comprend un appareil de mélange pour le mélange intime des composants d'enduction.
